# EUROPEAN PATENT APPLICATION

(11) **EP 1 380 767 A2**
(43) Date of publication of application: **14.01.2004**
(21) Application number: 03010023.4
(22) Date of filing: 02.05.2003
(51) Int. Cl.: F16D 65/24, F16D 51/00

(54) **Wheel cylinder with seal groove in bore of the housing**

(30) Priority: 11.07.2002 US 193543
(71) Applicant: Akebono Corporation North America, Farmington Hills, MI 48831 (US)
(72) Inventor: Barbosa, Manuel, Novi, Michigan 48375 (US)
(74) Representative: Neumann, Ernst Dieter, Dipl.-Ing.

(57) **Abstract**

A wheel cylinder assembly (22) for drum brake system. The wheel cylinder assembly includes a housing (40) that defines a piston bore (50). A seal groove (54) that is sized to receive an annular seal is formed into the piston bore. A piston (42) is disposed in the piston bore and through the seal such that the seal sealingly engages both the housing and the piston. The construction of the wheel cylinder is such that honing and/or roller burnishing of the piston bore is not required. The piston (42) has an outside diameter (70) with a surface finish having a roughness less than about 0,8 µm Ra.

## Description

### FIELD OF THE INVENTION

The present invention generally relates to drum brake systems and more particularly to a drum brake system with a wheel cylinder assembly that is relatively easier and less costly to manufacture.

### BACKGROUND OF THE INVENTION

Modern drum brake systems for motor vehicles are generally of either the leading-trailing drum type or the duo servo drum type. Both drum brake system configurations include a rotatable brake drum and a stationary backing plate assembly onto which a pair of brake shoes are movably mounted. The backing plate assembly typically includes a wheel cylinder assembly and an adjuster mechanism. The wheel cylinder assembly that is employed in the leading-trailing drum type and duo servo drum type configurations selectively produces a force that displaces the brake shoes against the inside diameter of the brake drum to produce a braking effect.

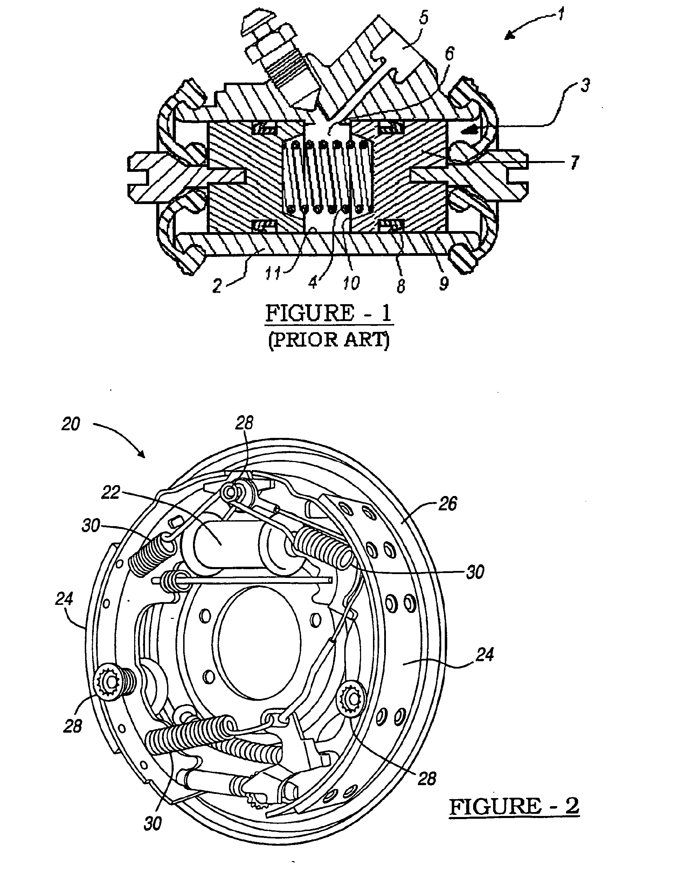

With reference to Figure 1 of the drawings, a wheel cylinder constructed in accordance with the prior art is generally indicated by reference numeral 1. The wheel cylinder includes a housing 2, a pair of piston assemblies 3 and a piston positioning spring 4, which biases the piston assemblies 3 away from one another (i.e., toward a respective one of the brake shoes to thereby reduce or negate a lag in the response of the brake system). The housing 2 includes a fluid conduit 5 that permits a hydraulic fluid (i.e., brake fluid) from a source (not shown) of hydraulic power to enter into a piston bore 6 that is formed in the housing 2. The piston assemblies 3 are slidably disposed in the piston bore 6 and include a piston 7 and a seal 8, which is disposed in a seal groove 9 that extends around the circumference of the piston 7. When pressurized hydraulic fluid is forced through the fluid conduit 5 and into the piston bore 6, a force is exerted onto the rear side 10 of the pistons 7, which causes the pistons 7 to slide in the piston bore 6 in a direction opposite one another. Contact between the seal 8 and the inner wall 11 of the piston bore 6 prevents the hydraulic fluid from passing around the piston 7 and into the environment.

As those skilled in the art will appreciate, the inner wall 11 of the piston bore 6 must be highly finished so as not to subject the seal 8 to excessive wear. Accordingly, the housings for prior art wheel cylinders, such as housing 2, are typically fabricated in a process that includes a honing or roller burnishing step so as to provide the inner wall 11 of the piston bore 6 with a finish having a roughness of about 0.40 µm (16 µ in.) Ra to about 0.20µm (8 µ in.) Ra.

As those skilled in the art will also appreciate, both honing and roller burnishing processes are expensive and greatly add to the cost of wheel cylinder assemblies. Accordingly, there remains a need in the art for a wheel cylinder assembly that does not require a piston bore having a highly finished inner wall so that operations such as honing and roller burnishing are not required.

### SUMMARY OF THE INVENTION

In one preferred form, the present invention provides a wheel cylinder assembly having a housing, a cylindrical piston and an annular seal. The housing defines a bore having a cylindrical inner wall into which a seal groove is formed. The inner wall has a surface roughness that is greater than about 1.6 µm (63 µ inch) Ra. The piston is disposed at least partially in the bore and has a surface roughness that is less than about 0.8 µm (32 µ inch) Ra. The annular seal is disposed in the seal groove and sealingly engages an outside diameter of the piston.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

Additional advantages and features of the present invention will become apparent from the subsequent description and the appended claims, taken in conjunction with the accompanying drawings, wherein:

Figure 1 is a sectional view of a prior art wheel cylinder assembly;

Figure 2 is a perspective view of a drum brake system having a wheel cylinder assembly constructed in accordance with the teachings of the present invention;

Figure 3 is a sectional view of the wheel cylinder assembly of Figure 2;

Figure 4 is a sectional view similar to Figure 3 illustrating the wheel cylinder assembly with an alternately constructed piston; and

Figures 5A and 5B are a sectional views of two alternately constructed pistons.

### DETAILED DESCRIPTION OF THE PREFERRED EMBODIMENTS

With reference to Figure 2 of the drawings, an exemplary drum brake system 20 is illustrated to include a wheel cylinder assembly 22 that is constructed in accordance with the teachings of the present invention. The drum brake system 20 conventionally includes a pair of brake shoes 24 that are movably coupled to a backing plate 26 via a set of mounting hardware 28 that includes a plurality of springs 30. The wheel cylinder assembly 22, which is fixedly mounted to the backing plate 26 and hydraulically coupled to a source of hydraulic power (not shown), is conventionally employed to selectively move the brake shoes 24 in a radially outward direction such that they engage the inside diameter of a brake drum (not shown) to produce a breaking effect.

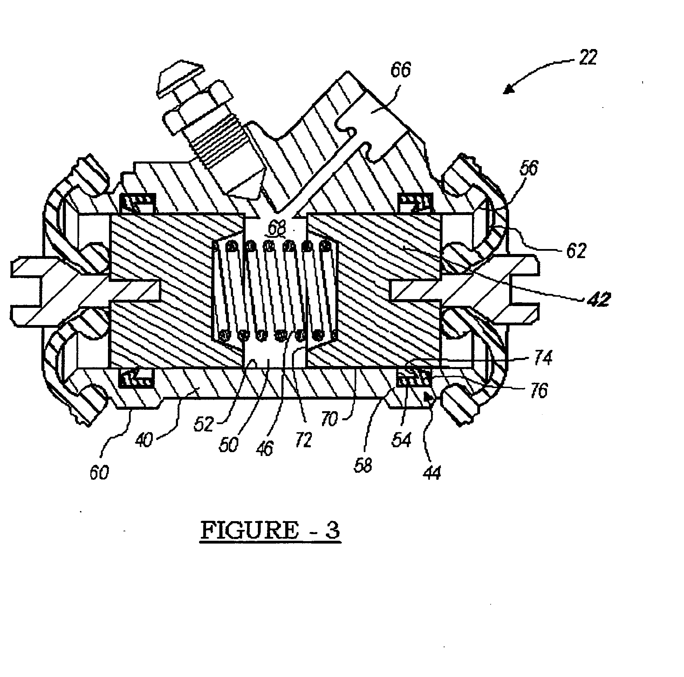

With reference to Figure 3, the wheel cylinder assembly 22 is illustrated to include a housing 40, a pair of cylindrical pistons 42, a pair of annular seals 44 and a piston positioning spring 46. The housing 40 defines a piston bore 50 that is sized to receive the pistons 42. The piston bore 50 delineates a cylindrical inner wall 52 into which a pair of seal grooves 54 are concentrically formed. The inner wall 52 is finished such that it has a surface roughness that is greater than about 1.6 µm (63 µ inch) Ra. The formation of the inner wall 52 may therefore be achieved through conventional, relatively low-cost hole forming techniques such as drilling, reaming or boring. An optional chamfer 56 may be provided on one or both of the distal ends of the piston bore 50 so as to facilitate the assembly of the wheel cylinder assembly 22.

The seal groove 54 is illustrated somewhat schematically and preferably includes comers 58 that are defined by a fillet radius or a chamfer so as not to unduly concentrate stress at the comers 58. An annular reinforcement 60, which is formed in the area adjacent each seal groove 54, serves to strengthen the distal ends 62 of the housing 40 in the area of the seal groove 54. Those skilled in the art will understand that while the seal grooves 54 may be placed closer to or farther from the distal ends of the piston bore 50 relative to the particular embodiment illustrated, it is presently preferred that the outer edge 64 of the seal groove 54 be positioned away from a respective one of the distal ends 62 by a distance that is equal to about 5% to about 25% of the diameter of the piston bore 50. Positioning of the seal grooves 54 in this manner permits the inner wall 52 to support each piston 42 on both sides of the seal groove 54.

The housing 40 also defines a fluid conduit 66 which intersects a central portion 68 of the piston bore 50. The fluid conduit 66 is conventionally coupled to a source of hydraulic power (not shown) to permit a hydraulic fluid (not shown) to be selectively distributed to the piston bore 50.

Each of the pistons 42 is slidably disposed at least partially within the piston bore 50 and has an outside diameter 70 with a surface finish having a roughness that is less than about 0.8 µm (32 µ inch) Ra. Preferably, the roughness of the outside diameter is about 0.8 µm (32 µ inch) Ra to about 0.05 µm (2 µ inch) Ra and more preferably, about 0.8 µm (32 µ inch) Ra to about 0.1 µm (4 µ inch) Ra. Still more preferably, the roughness of the outside diameter is about 0.8 µm (32 µ inch) Ra to about 0.2 µm (8 µ inch) Ra. In the example provided, the roughness of the outside diameter is about 0.4µm (16 µ inch) Ra to about 0.2µm (8 µ inch) Ra. Accordingly, the outside diameter 70 of the pistons 42 may be finished in a turning operation, or more preferably, a conventional grinding operation such as a centerless grinding operation.

The piston positioning spring 46 is conventional in its construction and operation and as such, need not be discussed in significant detail. Briefly, the piston positioning spring 46 is a compression spring that is disposed in the piston bore 50 and abuts the rear face 72 of the pistons 42. The piston positioning spring 46 serves to bias the pistons 42 away from one another and toward a respective one of the brake shoes 24 (Figure 2).

Each of the annular seals 44 is formed from a resilient material, such as an EPDM rubber, and is disposed in a respective one of the seal grooves 54. The annular seals 44 are illustrated to include a sealing lip 74, which sealingly engages a respective one of the pistons 42, and a seal body 76, which sealingly engages a respective seal groove 54. Each annular seal 44 therefore creates a seal between the housing 40 and a respective one of the pistons 42.

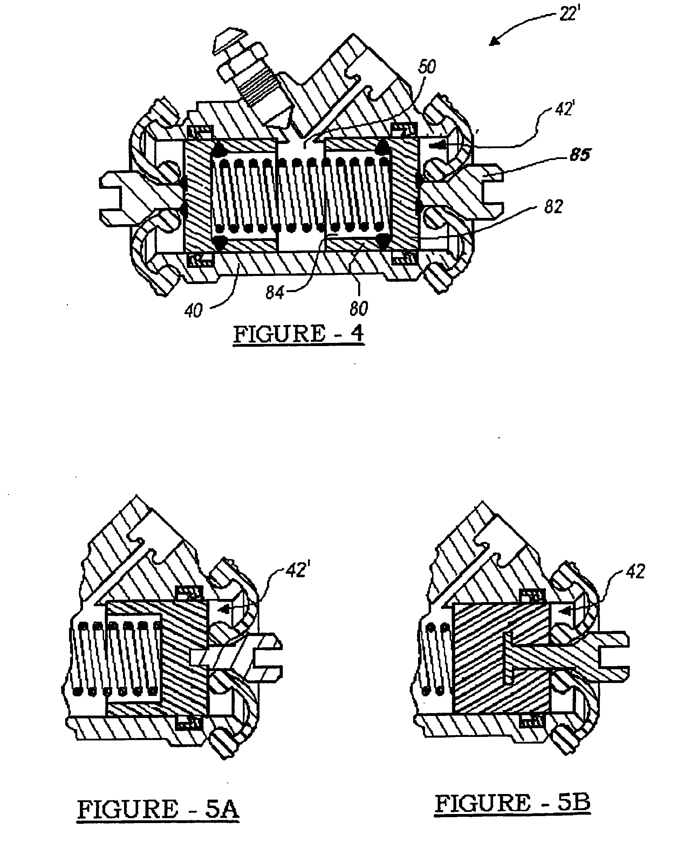

While the wheel cylinder assembly of the present invention has been described above as having a pair of unitarily formed solid pistons, those skilled in the art will understand that the invention, in its broader aspects, may be constructed somewhat differently. For example, the piston 42' may be formed with a hollow cavity 84 as illustrated in Figure 4. In this arrangement, the piston 42' is illustrated to include a body portion 80 and an end portion 82. The body portion 80 defines the cavity 84 and the end portion 82, which is fixedly coupled to a distal side of the body portion 80, closes a distal side of the cavity 84. The piston 42' may be unitarily formed (e.g., stamped) or may utilize a discrete end portion 82 that is coupled (e.g., friction welded) to the body portion 80. Additionally, the piston 42' (or the piston 42) may utilize a discrete rod end 85 that is coupled (e.g., friction welded) to the end portion 82. Further in Figures 5A and 5B, the pistons 42 and 42' may be formed at least partially from a non-metallic material, such as phenolic. Construction of the wheel cylinder assemblies 22 and 22' in this manner is advantageous in that it reduces their mass and cost, particularly where relatively large diameter pistons 42 or 42' are employed.

While the invention has been described in the specification and illustrated in the drawings with reference to a preferred embodiment, it will be understood by those skilled in the art that various changes may be made and equivalents may be substituted for elements thereof without departing from the scope of the invention as defined in the claims. In addition, many modifications may be made to adapt a particular situation or material to the teachings of the invention without departing from the essential scope thereof. Therefore, it is intended that the invention not be limited to the particular embodiment illustrated by the drawings and described in the specification as the best mode presently contemplated for carrying out this invention, but that the invention will include any embodiments falling within the foregoing description and the appended claims.

## Claims

1. A wheel cylinder assembly comprising:
a housing defining a bore, the bore having a cylindrical inner wall into which is a seal groove is formed, the inner wall having a surface finish having a roughness that is greater than about 1.6 µm (63 µ inch) Ra;
a cylindrical piston disposed at least partially in the bore and having an outside diameter, the outside diameter having a surface finish with a roughness that is less than about 0.8 µm (32 µ inch) Ra; and
an annular seal disposed in the seal groove and sealingly engaging the outside diameter of the piston.

2. The wheel cylinder assembly of Claim 1, wherein the roughness of the surface finish of the piston is about 0.8 µm (32 p inch) Ra to about 0.05 µm (2 µ inch) Ra

3. The wheel cylinder assembly of Claim 2, wherein the roughness of the surface finish of the piston is about 0.8 µm (32 µ inch) Ra to about 0.1 µm (4 µ inch) Ra.

4. The wheel cylinder assembly of Claim 3, wherein the roughness of the surface finish of the piston is about 0.8 µm (32 µ inch) Ra to about 0.2 µm (8 µ inch) Ra.

5. The wheel cylinder assembly of Claim 4, wherein the roughness of the surface finish of the piston is about 0.4 µm (16 µ inch) Ra to about 0.2 µm (8 µ inch) Ra.

6. The wheel cylinder assembly of Claim 1, wherein the piston includes a body and an end, the body having a cavity formed therethrough, the end being fixedly coupled to the body and closing a distal side of the cavity.

7. The wheel cylinder assembly of Claim 6, wherein the piston is a one-piece construction.

8. The wheel cylinder assembly of Claim 6, wherein the body is welded to the end.

9. The wheel cylinder assembly of Claim 1, wherein the piston is at least partially formed from a non-metallic material.

10. The wheel cylinder assembly of Claim 9, wherein the non-metallic material is phenolic.

11. The wheel cylinder assembly of Claim 1, wherein the housing includes an annular reinforcement that is disposed about the seal groove.

12. The wheel cylinder assembly of Claim 1, further comprising a rod end that is coupled to the piston.

13. A drum brake system comprising a first brake shoe, a second brake shoe and a wheel cylinder for moving the first and second brake shoes relative to one another, the wheel cylinder including a housing, a cylindrical piston and a seal ring, the housing defining a bore having a cylindrical inner wall into which is a seal groove is formed, the inner wall having a surface finish having a roughness that is greater than about 1.6 µm (63 µ inch) Ra, the piston being disposed at least partially in the bore and having a surface finish with a roughness of about 0.8 µm (32 µ inch) Ra to about 0.05 µm (2 µ inch) Ra, the annular seal being disposed in the seal groove and sealingly engaging an outside diameter of the piston.

14. The wheel cylinder assembly of Claim 13, wherein the piston includes a body and an end, the body having a cavity formed therethrough, the end being fixedly coupled to the body and closing a distal side of the cavity.

15. The wheel cylinder assembly of Claim 14, wherein the piston is a one-piece construction.

16. The wheel cylinder assembly of Claim 14, wherein the body is welded to the end.

17. The wheel cylinder assembly of Claim 13, wherein the piston is at least partially formed from a non-metallic material.

18. The wheel cylinder assembly of Claim 17, wherein the non-metallic material is phenolic.

19. The wheel cylinder assembly of Claim 13, further comprising a rod end that is coupled to the piston.
